# EUROPEAN PATENT APPLICATION

(11) **EP 2 937 603 A1**
(43) Date of publication of application: **28.10.2015**
(21) Application number: 14290115.6
(22) Date of filing: 22.04.2014
(51) Int. Cl.: F16J 15/48, F16K 5/20

(54) **Spherical valve**

(71) Applicant: ALSTOM Renewable Technologies, 38100 Grenoble (FR)
(72) Inventor: Mathieu, Alain, 38250 Saint Nizier du Moucherotte (FR)
(74) Representative: Alstom Technology Ltd

(57) **Abstract**

A spherical valve (10) comprises a sealing system (201,202), able to rotate and alternate from a closed into an open position: in the closed position, the sealing system rests in a tight way onto valve contact seats (22), stopping the flow of fluid through the spherical valve (10); in the open position, the flow of fluid in the spherical valve (10) is allowed.

## Description

### FIELD OF THE INVENTION

The present invention relates to a spherical valve integrated in a fluid distribution system, such that the spherical valve allows interrupting or enabling the fluid circulation in a selective way.

### BACKGROUND

Fluid distribution systems with hydraulic machines typically comprise a valve upstream of the hydraulic machine, allowing the control of the flow of fluid through the hydraulic machine, by authorizing or interrupting this flow. By hydraulic machine, a turbine, a pump or a turbine-pump must be understood. Such a valve typically comprises a rotating blocking member that is operated by a control device: the control device acts on the blocking member, making it rotate in one or in another sense of rotation, so that this alternatively authorizes or interrupts the flow of fluid. These valves are typically of the spherical type, where the blocking member has the shape of a sphere.

These rotating spherical valves are changed from an open position, authorizing the fluid to flow through, into a closed position, where they must avoid any flow of fluid through. For these reasons, spherical valves comprise movable seals that need to properly and effectively close the flow of fluid in the cited closed position.

As it is known in the prior art, the spherical valves comprise movable seals made of metallic ring that, by water pressure, are pressed all around corresponding seats in these valves. However, there exist several problems in the configurations of the prior art:
- For a given valve diameter, the adjustment of the movable seals with respect to the different parts in the fluid distribution system is difficult, expensive and creates undesired forces in some of the parts;
- During operation, the movable rings can get jammed;
- Water pressure in the body is needed to move back from the closed position the movable seals, which results in some difficulties to do trial movements in workshop tests or at site without water in penstock.

Also known in the prior art is the use of double acting movable seals that are part of the hydraulic conduct, The present invention is aimed at solving these drawbacks of the prior art.

### SUMMARY OF THE INVENTION

The present invention relates to a spherical valve integrated in a fluid distribution system, this spherical valve allowing interrupting or enabling the fluid circulation in a selective way. The spherical valve comprises a sealing system, able to rotate and alternate from a closed into an open position: in the closed position, the sealing system rests in a tight way onto valve contact seats, stopping the flow of fluid through the spherical valve; in the open position, the flow of fluid in the spherical valve is allowed.

The sealing system in the spherical valve of the invention comprises:
- a downstream movable seal, having a specific shape providing a compromise between strength and flexibility so that the downstream movable seal can rest onto the valve contact seats in a tight way;
- an upstream movable seal, symmetric to the downstream movable seal;
- at least two housings for guiding the movement of the downstream movable seal;
- at least two housings for guiding the movement rotation of the upstream movable seal;
- a locking device to fix and maintain the position of the upstream movable seal;
- downstream positioning sensors for monitoring the positioning of the downstream movable seal;
- upstream positioning sensors for monitoring the positioning of the upstream movable seal.

The main functions of the system of the invention are the following:
- Assure fluid sealing without unacceptable leakage;
- Assure the fastening of the sealing system in a non-reversible;
- Assure the detection of the position of the sealing system.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein.
Figure 1 shows a general overview of a spherical valve integrated in a fluid distribution system, according to the known prior art.
Figure 2 shows the overview of the components of a spherical sealing system in a fluid distribution system, according to the present invention, located downstream in the fluid distribution system.

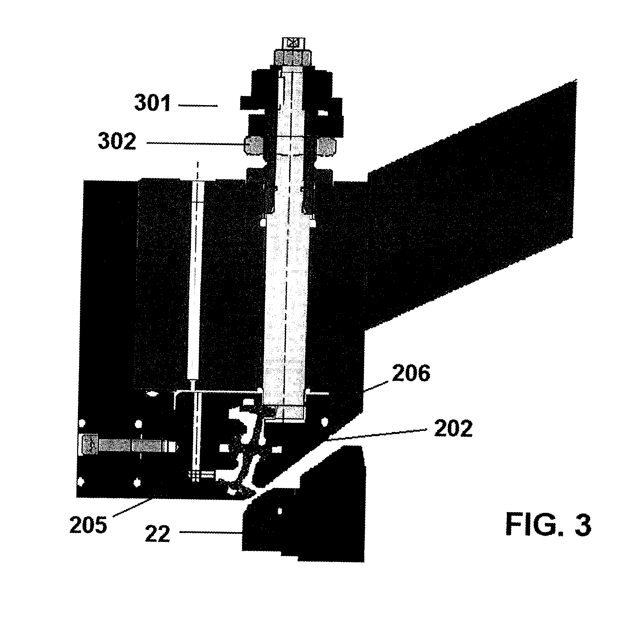

Figure 3 shows the locking device for the upstream movable seal in a spherical valve in a fluid distribution system, according to the present invention.

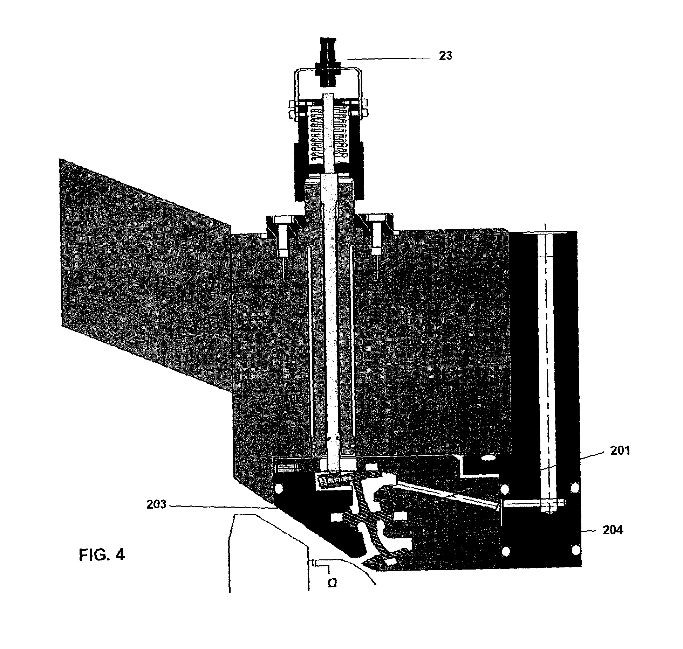

Figure 4 shows the positioning sensors for the downstream movable seal in a spherical valve in a fluid distribution system, according to the present invention.
Figures 5a and 5b show the water sealing of the downstream movable seal in a spherical valve in a fluid distribution system, according to the present invention.
Figures 5c and 5d show the water sealing of the upstream movable seal in a spherical valve in a fluid distribution system, according to the present invention.
Figure 6 shows the geometry and specific configuration of the upstream movable seal in a spherical valve in a fluid distribution system, according to the present invention.
Figure 7 shows the locking device for the upstream movable seal in a spherical valve in a fluid distribution system, according to the present invention.

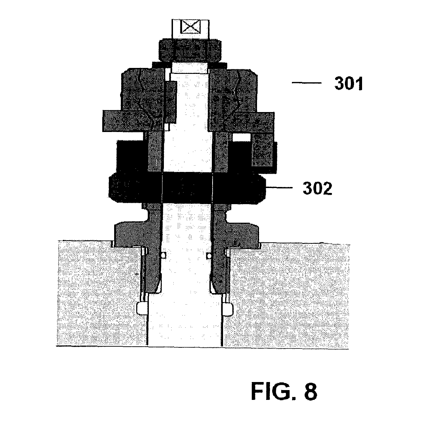

Figure 8 shows further details of the configuration of the screw-nut system of the locking device for the upstream movable seal in a spherical valve in a fluid distribution system, according to the present invention.
Figure 9 shows the configuration of the overlays in the housing for the downstream movable seal in a spherical valve in a fluid distribution system, according to the present invention.

### DETAILED DESCRIPTION OF THE INVENTION

The present invention relates to a spherical valve 10 integrated in a fluid distribution system, such that the spherical valve 10 allows interrupting or enabling the fluid circulation in a selective way. With reference to the following figures, the spherical valve 10 for hydraulic machines according to preferred embodiments of the present invention, movable between a released position and a forward position to allow/stop a flow of a fluid comprises valve contact seats 22, a movable seal (201; 202), comprising a rotary central body and an elongated ring, the elongated ring having a terminal member configured to abut on the contact seats 22 when in a forward position stopping the flow of fluid. The valve 10 also comprises at least two facing housings configured to guide rotation of the central body. Advantageously, as it will in detail described in the foregoing description of preferred embodiments, the elongated ring is made of a material such to be elastically deformed when an operating thrust is applied to the movable seal when in forward position.

The spherical valve 10 comprises a sealing system 20, able to rotate and alternate from a closed into an open position: in the closed position, the sealing system 20 rests in a tight way onto valve contact seats 22, stopping the flow of fluid through the spherical valve 10; in the open position, the flow of fluid in the spherical valve 10 is allowed.

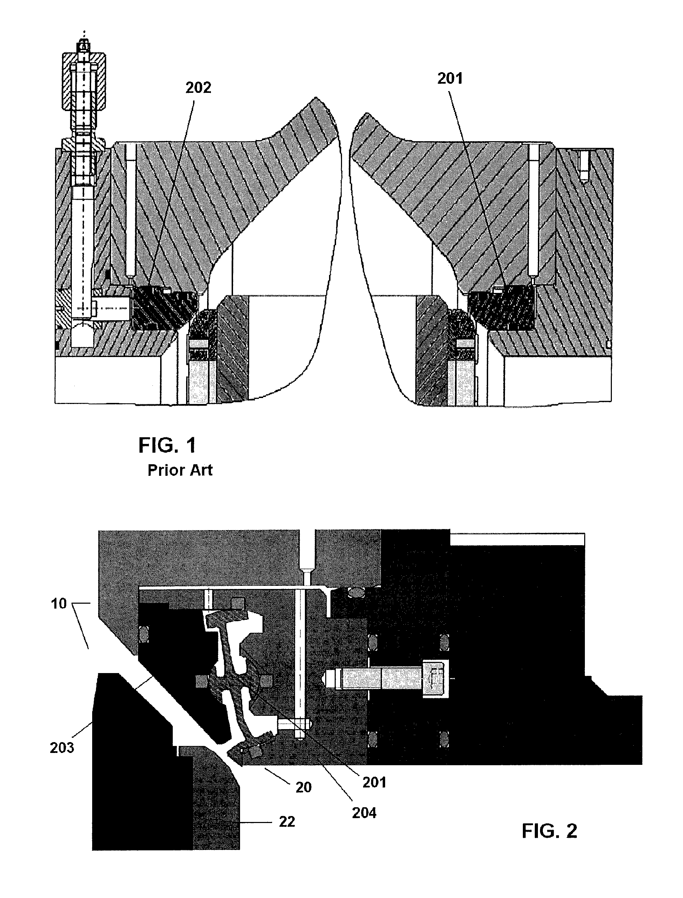

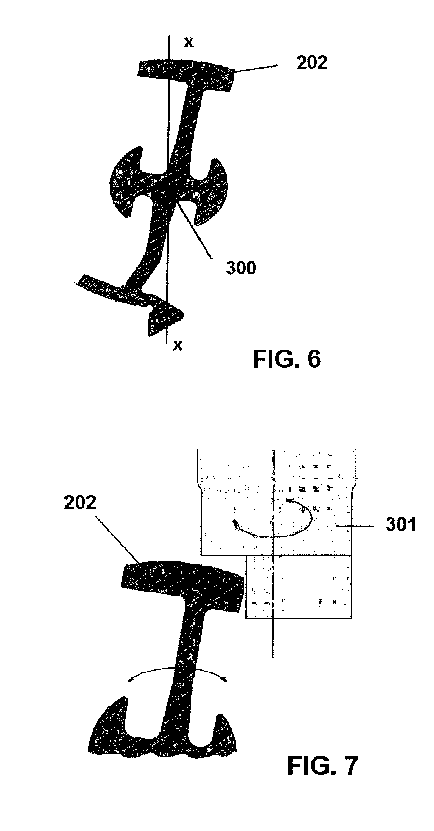

The sealing system 20 of the invention comprises:
- a downstream movable seal 201, able to rotate and made of a metallic material, plastic, composite materials or mixed of metallic and composite materials, having a specific shape, as shown in Figure 2 and 6, this shape providing a compromise between strength and flexibility so that the downstream movable seal 201 can rest onto the valve contact seats 22 in a tight way, even if these valve contact seats 22 have vary their dimensions and/or shape;
- an upstream movable seal 202, symmetric to the downstream movable seal 201;
- at least two housings 203 and 204 for guiding the rotation of the downstream movable seal 201;
- at least two housings 205 and 206 for guiding the rotation of the upstream movable seal 202;
- a locking device 301, preferably manually, on the upstream movable seal 202;
- downstream positioning sensors 23 for the downstream movable seal 201, comprising at least three end of stroke sensors;
- upstream positioning sensors 24 for the upstream movable seal 202, comprising at least three end of stroke sensors.

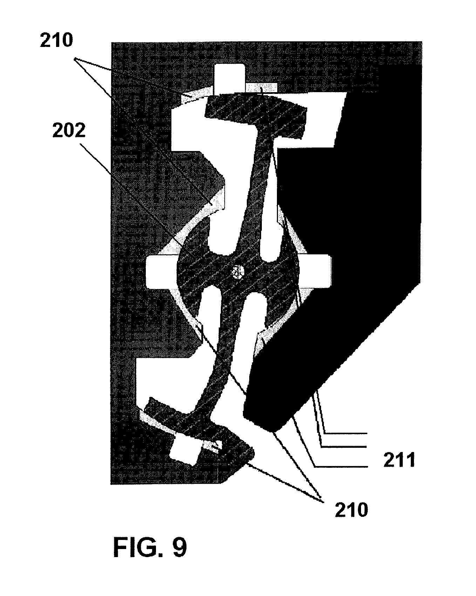

In order to avoid the corrosion of the friction surfaces in front of the movable rings, overlays (210 and 211, as shown in Figure 9, for downstream movable seals 201, similar ones exist for upstream movable seals 202) are provided in the first and second housings for the movable rings. Typically, these overlays are made of copper-aluminum or stainless steel, provided on the carbon steel surfaces of the housings of the movable rings. The housings can also be fully in stainless steel.

The main functions of the spherical valve 10 of the invention are the following:
- Assure fluid (typically, water) sealing without unacceptable leakage when the sealing system 20 rests onto valve contact seats 22;
- Assure the fastening of the sealing system 20 in a non-reversible position in order to secure the sealing avoiding any possible flood and injury of people;
- Assure the detection of the position of the spherical valve 10 by the use of the downstream and upstream positioning sensors 23 and 24, respectively.

The main functions of the sealing system 10 of the invention are indicated below.

### Water sealing

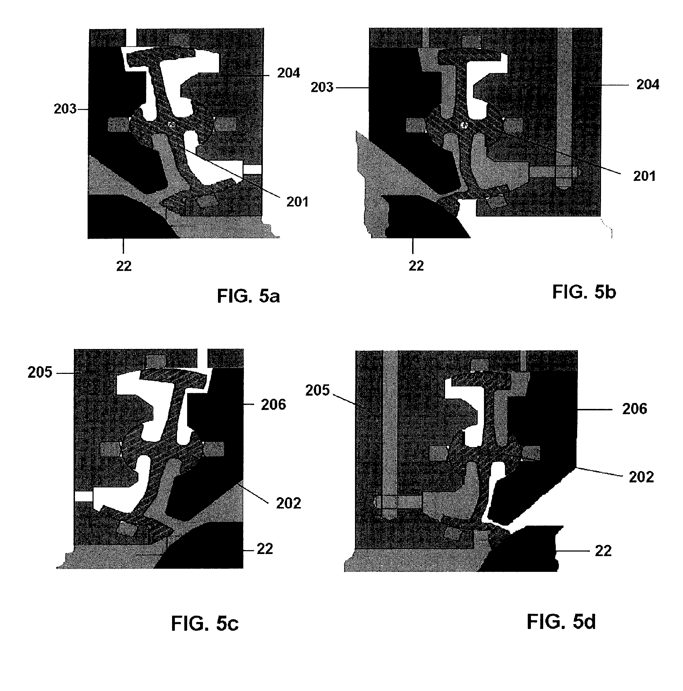

The water sealing function is assured by the downstream or upstream movable seals 201, 202 comprising a movable ring twisted having one extremity that is moved towards the valve contact seats 22. As the deflection of the valve contact seats 22 is not uniform all around its periphery, the movable ring must have a sufficient softness in order to match and adapt to the deformed shape of the valve contact seats 22. However, the movable ring must also have sufficient stiffness in order to have a limited deflection caused by water pressure. Figures 5a, 5b, 5c and 5d show the downstream and upstream movable seals 201, 202 being released from the valve contact seats 22 or applied to the valve contact seals 22.

As the tightness is based on the deflection of the movable ring, it has a natural tendency to move back in its natural position so no energy is necessary to release the tightness.

In the released position (see Figures 5a and 5c), the movable ring is submitted to the water pressure on the front side, that is, the operating effort is the thrust of the water pressure plus the friction of the radial seal.

In the forward or applied position (see Figures 5b and 5d), the movable ring is submitted to the water pressure on the front side and in the operating chambers, that is, the operating effort is the thrust of the water pressure plus the necessary load to deform the ring plus the friction of the radial seal.

As shown in Figure 6, the inertia around the axis XX of the movable ring must be as small as possible in order to allow the deformation of the movable ring with a low pressure: this is why the specific shape of the movable ring is designed.

### Locking of the upstream movable seal 202

The spherical valve 10 of the invention also comprises a locking device 301 that is used to lock the upstream movable seal 202: typically, the locking device 301 comprises a cam, the rotation of which, as shown in Figure 7, locks the upstream movable seal 202.

The locking device 301 also comprises a screw-nut system 302 avoiding the rotation of the locking device 301 when locking the upstream movable seal 202.

### Positioning detection of movable ring

Positioning sensors for downstream 23 and upstream 24 movable seals assure the detection of the positioning of the movable ring: at least three sensors, evenly located, are used, for each one of the movable rings. The positioning detection of the movable rings is mandatory for safety reasons, in order to detect if the movable ring is in good positioning for the operations.

The main advantages provided by the design of the sealing system 10 of the invention are indicated herewith:
- The compromise between the deformability and strength of the movable rings;
- A smallest sealing diameter inducing a smaller thrust load on the plug.

Although the present invention has been fully described in connection with preferred embodiments, it is evident that modifications may be introduced within the scope thereof, not considering this as limited by these embodiments, but by the contents of the following claims.
10 Spherical valve
20 Sealing system
22 Valve contact seats
23 Positioning sensors for downstream movable seal
24 Positioning sensors for upstream movable seal
201 Downstream movable seal
202 Upstream movable seal
203 First housing for downstream movable seal
204 Secondary housing for downstream movable seal
210 Overlays in first housing for downstream movable seal
211 Overlays in secondary housing for downstream movable seal
205 First housing for upstream movable seal
206 Secondary housing for upstream movable seal
300 Center of all the torispherical surfaces of the movable seal
301 Locking device for upstream movable seal
302 Screw-nut system of locking device for upstream movable seal

## Claims

1. Spherical valve (10) for hydraulic machines, movable between a released position and a forward position to allow/stop a flow of a fluid, comprising:
- valve contact seats (22);
- a movable seal (201; 202), comprising a rotary central body and an elongated ring, said elongated ring having a terminal member configured to abut on said contact seats (22) when in a forward position stopping the flow of fluid;
- at least two facing housings (203, 204; 205, 206) configured to guide rotation of said central body;
wherein said elongated ring is made of a material such to be elastically deformed when an operating thrust is applied to said movable seal when in forward position.

2. Spherical valve (10) according to the preceding claim, wherein the movable seal (201; 202) and the facing housings define a front operating chamber configured to be filled with water when in the released position, and a rear operating chamber configured to be filled with water while in forward position.

3. Spherical valve (10) according to claims 1 or 2, wherein at least said elongated ring is made of a metallic material, plastic, composite materials or mixed of metallic and composite materials.

4. Spherical valve (10) according to any of the preceding claims, wherein said central body comprises two opposed mushroom-shaped members configured to rotate within corresponding concave outer surfaces of said housings (203, 204; 205, 206).

5. Spherical valve (10) according to any of the preceding claims, further comprising overlays (210, 211) disposed on said housings.

6. Spherical valve (10) according to the preceding claim, wherein said overlays are made of copper-aluminum or stainless steel.

7. Spherical valve (10) according to anyone of the preceding claims, further comprising a locking device (301) configured to lock said seal (201; 202) when in the forward position.

8. Spherical valve (10) according to the preceding claim, wherein said locking system (301) comprises a cam configured to rotate such to block said seal (201; 202).

9. Spherical valve (10) according to the preceding claim, further comprising a screw-nut system (302) configured to inhibit the rotation of said locking system (301) when locking said seal (201; 202).

10. Spherical valve (10) according to any of the preceding claims, further comprising positioning sensors associated to said movable seal (201, 202).

11. Seal (201; 202) of a spherical valve (10) for hydraulic machines, comprising a central body and an elongated ring, said elongated ring having a terminal member configured to abut on contact seats (22) of the valve (10), wherein said elongated ring is made of a material such to be elastically deformed by an operating thrust is applied when in operation.

12. Seal (201, 202) according to the preceding claim, made of a metallic material. plastic, composite materials or mixed of metallic and composite materials.

13. Seal (201; 202) according to claims 11 or 12, wherein said central body comprises two opposed mushroom-shaped members.
